# EUROPÄISCHE PATENTSCHRIFT

(11) **EP 2 066 540 B1**
(45) Veröffentlichungstag und Bekanntmachung des Hinweises auf die Patenterteilung: **20.04.2011**
(21) Anmeldenummer: 07802165.6
(22) Anmeldetag: 06.09.2007
(51) Int. Cl.: B60T 8/36, F16K 31/06

(54) **ZWEISTUFIGES MAGNETVENTIL FÜR EINE ELEKTROPNEUMATISCHE VENTILSTEUEREINHEIT**
TWO-STAGE SOLENOID VALVE FOR AN ELECTROPNEUMATIC VALVE CONTROL UNIT
ÉLECTROVALVE À DEUX NIVEAUX POUR UNE UNITÉ DE COMMANDE ÉLECTROPNEUMATIQUE À VALVES

(30) Priorität: 20.09.2006 DE 102006044765
(43) Veröffentlichungstag der Anmeldung: 10.06.2009
(73) Patentinhaber: WABCO GmbH, 30432 Hannover (DE)
(72) Erfinder: FRANK, Dieter, 30171 Hannover (DE); ROVIRA-RIFATERRA, Juan, 30827 Garbsen (DE); SIEKER, Armin, 33611 Bielefeld (DE); TEICHMANN, Andreas, 30916 Isernhagen (DE)
(74) Vertreter: Lauerwald, Jörg
(86) Internationale Anmeldenummer: PCT/EP2007/007760
(87) Internationale Veröffentlichungsnummer: WO 2008/034524

(56) Entgegenhaltungen:
- DE-A1- 3 929 348
- DE-A1- 10 009 116
- DE-A1-102004 035 763

## Beschreibung

Die Erfindung betrifft ein zweistufiges Magnetventil für eine elektropneumatische Ventilsteuereinheit, insbesondere für eine Vorsteuereinheit eines Druckmodulators.

Ein derartiges Magnetventil kann insbesondere in der Vorsteuereinheit eines Bremsmodulators vorgesehen sein, die mit ihren Magnetventilen ein luftmengenverstärkendes Relaisventil ansteuert, das wiederum ein oder mehrere Kanäle ansteuern kann. Bei Verwendung in einem elektropneumatischen Bremssystem, z.B. einem elektronisch geregelten Bremssystem (EBS) für Anhängerfahrzeuge, werden durch das Relaisventil Radbremsmodule mit Bremszylindern für die Radbremsen angesteuert.

Die DE 10 2004 035 763 A1 zeigt ein derartiges Magnetventil, das als Ventilsteuereinheit für zwei Bremskanäle einer elektronisch-pneumatischen Bremsanlage vorgesehen ist. In einer Ventileinheit ist ein Belüftungsventil mit einem Primäranker und ein Entlüftungsventil mit einem Sekundäranker vorgesehen, wobei die beiden Magnetanker eine gemeinsame Ankerführungsanordnung und ein gemeinsames Magnetspulensystem aufweisen und bei unterschiedlichen Stromstärken schalten. Somit kann eine Belüftung des nachfolgenden Radmoduls, ein Halten des eingegebenen Drucks und ein Entlüften mittels eines gemeinsamen Magnetspulensystems verwirklicht werden.

Die Montage des zweistufigen Magnetventils der DE 10 2004 035 763 A1 erfolgt von beiden Seiten her in das Gehäuse der Vorsteuereinheit. Somit werden jeweils Anker mit Ankerfeder, Ankerführungsrohr mit Kern und Ventilsitz von der Primär- bzw. Sekundärseite in die gemeinsame Spule eingebracht. Die jeweiligen Kerne werden in der Mitte verpresst. Verschlusselemente fixieren die Gestellinnereien der Magnetsspulensysteme der mehreren Ventileinheiten.

Die DE 100 09 116 A1 zeigt eine Ventileinrichtung für die Vorsteuereinheit eines Bremsdruckmodulators in einem Anhänger mit elektronischer Bremsanlage. Hierbei sind die Magnetventile als Patronen-Magnetventile ausgeführt, deren Ventilpatrone in ein Gehäuse mit Magnetspule gesetzt wird. Hierbei wird zuerst die Magnetspule in das Gehäuse eingelegt und anschließend die Ventilpatrone in das Gehäuse eingeschoben und mit dem Gehäuse verbunden.

Der Erfindung liegt die Aufgabe zugrunde, ein zweistufiges Magnetventil für eine elektropneumatische Steuereinheit zu schaffen, das einen sicheren Betrieb und eine schnelle, einfache Montage ermöglicht.

Diese Aufgabe wird durch eine Magnetventil nach Anspruch 1 gelöst. Die Unteransprüche beschreiben bevorzugte Weiterbildungen.

Erfindungsgemäß wird somit eine Ventilpatrone ausgebildet, die aufgrund ihres sich zu einer Seite hin verschlankenden Querschnitts von einer Seite her eingesetzt werden kann. Die Ventilpatrone kann insbesondere als Stufenkörper mit aufgenommenen beweglichen Teilen, d.h. Ankern und Federn, in das Magnetsystem eingesetzt werden.

Es ergeben sich erfindungsgemäß einige Vorteile:
Die Ventilpatrone baut klein, ist kostengünstig und vorteilhafterweise unanfällig gegenüber Fehlmontagen.

Es ist eine Einseitenmontage mit einfacher Befestigungsmöglichkeit der Magnetinnereien möglich. Das aufnehmende Gehäuse, z. B. einer Vorsteuereinheit, wird dadurch einfacher.

Es können vormontierte und vorgeprüfte Einheiten verbaut werden. Damit wird auch die Reparatur einfacher.

Temperaturdehnungen des umgebenden Gehäuses haben keinen Einfluss auf die Hubtoleranzen und die Ankerkräfte.

Der einteilige Kern hat gegenüber herkömmlichen geteilten Kernen den Vorteil, dass der Magnetfluss nicht durch eine Pressverbindung behindert wird. Das Magnetverhalten bleibt über die Stückzahl konstanter.

Die Erfindung wird im Folgenden anhand der beiliegenden Zeichnungen an einer Ausführungsform näher erläutert. Es zeigen:
- Fig. 1: einen Axialschnitt durch eine erfindungsgemäße Ventilpatrone Magnetventil;
- Fig. 2: einen Axialschnitt durch ein erfindungsgemäßes Magnetventil mit der Ventilpatrone und der Magnetspule;
- Fig. 3: einen Schnitt durch eine Vorsteuereinheit mit dem erfindungsgemäßen Magnetventil.

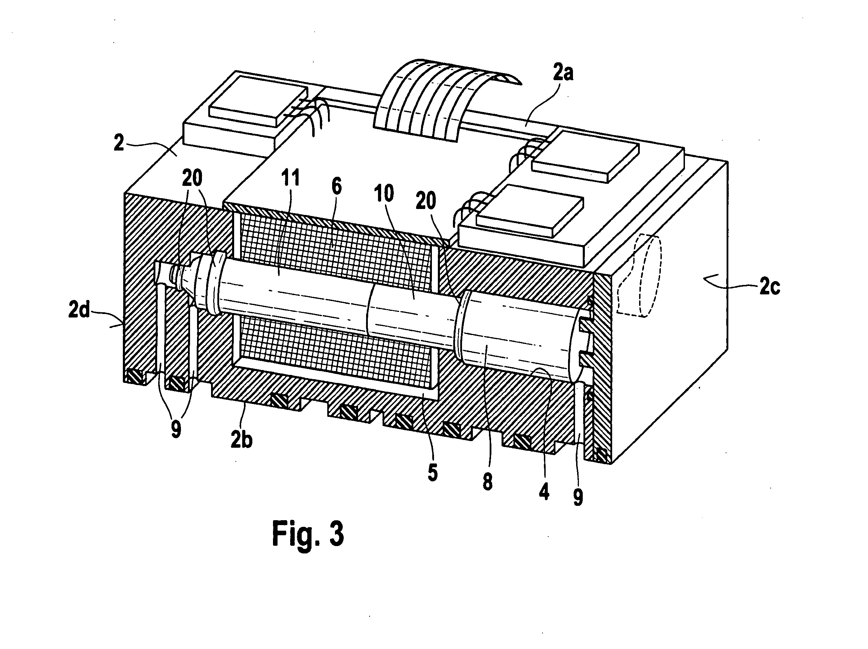

Ein Magnetventil 1 ist zum Einsatz in ein in Fig. 3 grob wiedergegebenes Vorsteuergehäuse 2 vorgesehen. Hierbei ist in dem Vorsteuergehäuse 2 mindestens eine sich von einer Seitenfläche 2c her in Querrichtung erstreckende Ventilbohrung 4 vorgesehen, die erfindungsgemäß als Sackbohrung ausgebildet sein kann, so dass die gegenüberliegenden Seitenfläche 2d grundsätzlich geschlossen sein kann. Alternativ hierzu kann die Ventilbohrung 4 auch durchgehend ausgebildet sein. Vorteilhaft können hierbei mehrere Ventilbohrungen 4 parallel ausgebildet sein, wobei nachfolgend die dargestellte Ventilbohrung 4 beschrieben wird.

In einer sich von der Oberseite 2a des aus z. B. Kunststoff gefertigten Vorsteuergehäuses 2 her ausgebildeten Gusstasche 5 ist eine Magnetspule 6 eingesetzt, so dass ihr mittiges Durchgangsloch mit der Ventilbohrung 4 fluchtet. Die Magnetspule 6 ist in hier nicht weiter beschriebener Weise mit einer elektrischen Schnittstelle kontaktiert.

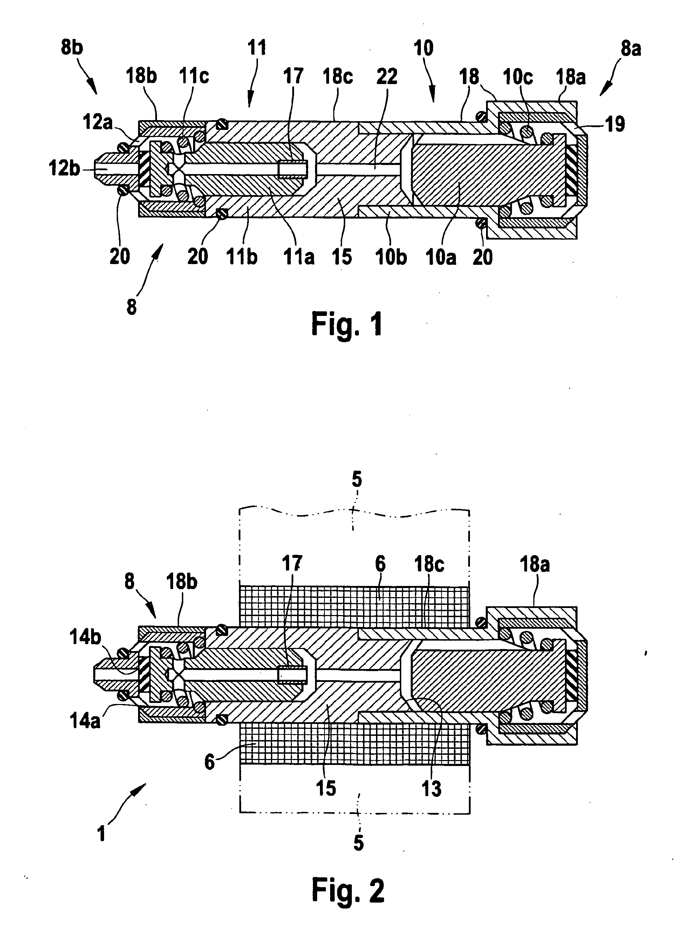

Eine Ventilpatrone 8 ist von der Seitenfläche 2c, d.h. von ihrer Primärseite her in die Ventilbohrung 4 eingesetzt und an der Seitenfläche 2c befestigt. Sie fixiert hierbei die von oben her eingesetzte Magnetspule 6 in vertikaler Richtung, d.h. sie wirkt wie eine Splint-Sicherung; die Magnetspule 6 ist hierbei ergänzend noch durch andere Anlagpunkte im umgebenden Gehäuse fixiert. Die Ventilpatrone 8 wird von ihrer in Fig. 1 rechts gezeigten Primärseite 8a her mit Druckluft beaufschlagt, z. B. über einen sich in vertikaler Richtung durch das Vorsteuergehäuse 2 erstreckenden Druckluftkanal 9, und gibt an seiner in Fig. 1 linken Sekundärseite 8b Druckluft über mindestens einen weiteren, sich in vertikaler Richtung durch das Vorsteuergehäuse 2 erstreckenden Druckluftkanal 9 ab.

Die Ventilpatrone 8 weist ein Primärventil 10 und ein Sekundärventil 11 auf. Bei dieser Ausführungsform ist das Primärventil 10 als 2/2-Wegeventil mit einer Durchlass- und einer Sperrstellung ausgebildet. Das Sekundärventil 11 ist als 3/2-Wegeventil ausgebildet und weist eine Belüftungs- bzw. Steuerdruckstellung und eine Entlüftungsstellung auf. In der Belüftungsstellung wird die von dem Primärventil 10 kommende Druckluft an einen Belüftungsausgang 12a z. B. zur Belüftung eines angeschlossenen Druckzylinders einer Radbremse ausgeben. In der Entlüftungsstellung wird der erste Ausgang 12a mit einem Entlüftungsausgang 12b verbunden.

Das Primärventil 10 weist einen Primäranker 10a mit einem Durchmesser von z. B. 8 mm auf, der in einem magnetisch nicht leitenden Ankerführungsrohr 10b, z. B. aus Messing oder nicht-magnetischem Stahl, in Axialrichtung geführt und von einer Ankerfeder 10c in seine offene Stellung vorgespannt ist, in der der Primäranker 10a somit nicht auf seinem Primär-Ventilsitz 13 aufliegt.

Entsprechend weist das Sekundärventil 11 einen Sekundäranker 11a mit einem Durchmesser von z. B. 6 mm auf, der in einem magnetisch leitenden Ankerführungsrohr 11b, welches mit dem Kern 15 einteilig ausgeführt ist und das vorteilhafterweise starr mit dem Primär-Ankerführungsrohr 10b verbunden ist. Der Sekundäranker 11a ist von einer Ankerfeder 11c vorgespannt und wirkt mit einem ersten Ventilsitz 14a für den ersten Ausgang 12a und einem zweiten Ventilsitz 14b für den zweiten Ausgang 12b zusammen; bei der gezeigten Ausbildung kann hierbei der Ventilsitz 14a immer offen sein.

Der magnetische Fluss durch des Magnetspulensystems 6 verläuft durch die beiden Anker 10a, 11a und den zwischen diesen ausgebildeten gemeinsamen Kern 15 aus magnetisch leitendem Material. Zwischen dem Kern 15 und den Ankern 10a, 11a können Antiklebelemente 17 vorgesehen sein, die ein früheres Abfallen bei höheren Strömen bewirkt, z. B. durch Einpressen im Kern 15 oder an den Ankern 10a, 11a. Hierbei ist insbesondere zwischen dem Sekundäranker 11a und dem Kern 15 ein Antiklebelement 17, z. B. eine als Abstandshalter dienende Hülse, vorgesehen, wobei zwischen dem Kern 15 und dem Primäranker 10a ein Luftspalt ausgebildet sein kann, der den durch den Primäranker 10a verlaufenden magnetischen Fluss radial nach außen ablenkt.

Die beiden Anker 10a, 11a werden durch das gemeinsame Magnetspulensystem 6 verstellt, das hierbei unbestromt sein kann oder mit einer ersten, niedrigeren Stromstärke oder einer zweiten, höheren Stromstärke bestromt werden kann.

Es ergeben sich somit drei Schaltstellungen:
eine unbestromte Ruhestellung, in der das Primärventil 10 offen ist und der Belüftungsanschluss 12a des Sekundärventils 11 freigelassen ist und der Entlüftungsanschluss 12b gesperrt ist.
eine Stellung bei Bestromung mit der ersten, niedrigeren Stromstärke, bei der nur der Primäranker 10a verstellt wird und das Primärventil 10 somit geschlossen ist; die Federkraft der Primär-Ankerfeder 10c und die restliche Abstimmung des Ventilsystems sind somit derartig ausgelegt, dass sie bereits bei der ersten Stromstärke verstellt wird, die Sekundär-Ankerfeder 11c hingegen hält den Sekundäranker 11a noch; somit ist der Entlüftungsanschluss 12b weiterhin gesperrt, so dass der Druck in dem Belüftungsanschluss 12a gehalten wird,
eine Stellung bei Bestromung mit der zweiten, höheren Stromstärke, bei der das Primärventil 10 weiterhin geschlossen ist und weiterhin auch der Sekundäranker 11a verstellt wird und somit das Sekundärventil 11 den Belüftungsanschluss 12a und den Entlüftungsanschluss 12b verbindet. Somit kann zwischen dem Belüftungsanschluss 12a und dem Entlüftungsanschluss 12b eine Entlüftung stattfinden.

Der Luftstrom tritt somit durch einen Lufteintritt 19 in das Primärventil ein, am Primäranker 10a vorbei (oder hindurch) und bei Belüftung, d.h. stromlosem Zustand und offenem Primärventil 10a am Ventilsitz 13 vorbei in eine zentrale Luftbohrung 22 des Kerns 15 ein, von dort in das Sekundärventil 11, durch den Sekundäranker 11a zu dem Ventilsitz 14a vorbei in den Belüftungsanschluss 12a.

Der Kern 15 ist mit dem Primär-Ankerführungsrohr 10b aus Messing z. B. geklebt und gebördelt oder z. B. mit dem Ankerführungsrohr 10b dichtend verbunden. Die Sekundär- Ventilsitze 14a,b sind mit dem Kern 15 z. B. verbördelt oder dichtend verbunden. Hierdurch wird eine Ventilpatrone 8 mit den aufgenommenen beweglichen Teilen ausgebildet.

Es ergibt sich ein Stufenkörper 18, der die Anker 10a,11a aufnimmt und an der Primärseite einen zylindrischen Bereich 18a mit größerem Durchmesser aufweist und nach links zur Sekundärseite hin einen zylindrischen Bereich 18b, 18c mit geringerem Durchmesser aufweist, so dass er in die Magnetspule 6 bzw. deren Durchgangsloch eingesetzt werden kann und diese hierdurch fixiert. Die Primär-Ankerfeder 10c ist in dem größeren Bereich 18a und die Sekundär-Ankerfeder 11c in dem schlankeren Bereich 18b aufgenommen. Ein mittlerer Bereich 18c, der innerhalb des Magnetspulensystems 5 angeordnet ist, ist durchgängig mit dem die Sekundär-Ankerfeder 11c aufnehmenden schmaleren Bereich 18b ausgebildet.

O-Dichtringe 20 sind gemäß Fig. 1, Fig. 2 außen an der Ventilpatrone 8 im Übergang von dem Bereich 18a zu dem Bereich 18c, am vorderen Ende außen am Ventilsitz 14b und innen am Kern 15 bzw. Sekundär-Ankerführungsrohr 11b angeordnet.

Die Ventilpatrone 8 kann somit von der Seitenfläche 2c des Vorsteuergehäuses 2 her in die Ventilbohrung (Sackbohrung) 4 eingesetzt werden und fixiert hierdurch bereits das Magnetspulensystem 6.

Da die Ventilpatrone 8 in sich toleranzseitig abgestimmt ist, wird nur eine grobe Fixierung in Achsrichtung benötigt, was durch die Gusstasche 5 gewährleistet ist: Die Kraft, die beim erstmaligen Beaufschlagen der innen liegenden Druckflächen aufgebaut wird, schiebt die Ventilpatrone 6 gegen den Gehäuseanschlag, wo sie aufgrund diverser O-Ringreibungen der statischen Dichtungen verbleibt.

Die Kraft- und Hubtoleranzen der Ventilpatrone 8 können leicht eingestellt werden:
Bezüglich der Schaltschwellen spielt die Krafttoleranz der Ankerfedern 10c, 11c, insbesondere der Primär-Ankerfeder 10c, die größte Rolle. Ventilsitz und Ankerführungsrohr der Primärseite werden dicht miteinander verbunden. Die Position der Verbindung kann kraftabhängig gefunden werden. Damit ist die Ankerfederkraft einfach im laufenden Prozess einstellbar.

Nachfolgend werden das Ankerführungsrohr und der Kern 15 mit einander z. B. durch Verbördelung verbunden.

Hierdurch sind somit Hub und Kraft der Primärseite eingestellt.

Auf der Sekundärseite kann eine Einstellung erreicht werden durch
- eine Einstellung auf eine Sollfederkraft,
- Einstellung eines Sollhubes.

## Patentansprüche

1. Zweistufiges Magnetventil für eine elektropneumatische Ventilsteuereinheit, insbesondere eine Vorsteuereinheit eines Druckmodulators, wobei das Magnetventil mindestens aufweist:
ein Magnetspulensystem (6), das mit einer ersten und zweiten Stromstärke bestrombar ist, und
eine in dem Magnetspulensystem (6) aufgenommene Magnetventileinrichtung (8) mit einer Primärseite (8a) zum Anschluss an mindestens einen ersten Druckluftanschluss und einer Sekundärseite (8b) zum Anschluss an mindestens einen zweiten Druckluftanschluss,
wobei an der Primärseite ein Primärventil (10) mit einem durch eine Primär-Ankerfeder (10c) vorgespannten, verstellbaren Primäranker (10a) zur Anlage an mindestens einem Primär-Ventilsitz (13) vorgesehen ist,
wobei an der Sekundärseite ein Sekundärventil (11) mit einem durch eine Sekundär-Ankerfeder (11c) vorgespannten, verstellbaren Sekundäranker (11a) zur Anlage an mindestens einem Sekundär-Ventilsitz (14b) vorgesehen ist,
**dadurch gekennzeichnet, dass**
die Magnetventileinrichtung (8) als eine von der Primärseite (8a) oder der Sekundärseite (8b) her in ein Hauptgehäuse (2) der Ventilsteuereinheit einzusetzende Ventilpatrone (8) ausgebildet ist,
ein Durchmesser eines in Einsetzrichtung vorderen Bereichs (18b) der Ventilpatrone (8) kleiner oder gleich dem Durchmesser eines in Einsetzrichtung hinteren Bereichs (18a) der Ventilpatrone (8) ist,
die Ventilpatrone (8) einen Stufenkörper (18) mit dem hinteren breiteren Bereich (18a) und mindestens einem schmaleren Bereich (18b,c) aufweist,
ein zum schmaleren Bereich gehörender vorderer Bereich (18b) des Stufenkolbens die vordere Ankerfeder (11c) der beiden Ankerfedern (10c, 11c) aufnimmt,
ein zum schmaleren Bereich gehörender mittlerer Bereich (18c) des Stufenkolbens den Primäranker (10a) und Sekundäranker (11a) jeweils zumindest teilweise aufnimmt und zum Einsatz in das Magnetspulensystem (6) vorgesehen ist,
der hintere breitere Bereich (18a) des Stufenkolbens die hintere Ankerfeder (10c) der beiden Ankerfedern (10c, 11c) aufnimmt, und
die Ventilsitze (13, 14a,b) der in Einsetzrichtung vorderen Seite und der in Einsetzrichtung hinteren Seite der Ventilpatrone (8) mit dem Stufenkörper (18) verbunden sind.

2. Magnetventil nach Anspruch 1, **dadurch gekennzeichnet, dass** der Durchmesser des in Einsetzrichtung hinteren Bereichs (18a) der Ventilpatrone (8) größer oder gleich dem Durchmesser des mittleren Spulenbereichs (18c) der Ventilpatrone (8) ist.

3. Magnetventil nach Anspruch 1 oder 2, **dadurch gekennzeichnet, dass**
der hintere Bereich (18a) einen größeren Durchmesser als der vordere Bereich (18b) aufweist, und
der mittlere Bereich (18c) einen größeren oder gleichen Durchmesser als der vordere Bereich (18b) aufweist.

4. Magnetventil nach einem der vorherigen Ansprüche,
**dadurch gekennzeichnet, dass** die Verbindung der Ventilsitze (13, 14a,b) der in Einsetzrichtung vorderen Seite und der in Einsetzrichtung hinteren Seite mit dem Stufenkörper (18) durch Verbördelng und/oder Verstemmung und/oder Verschweißung ausgebildet sind.

5. Magnetventil nach einem der vorherigen Ansprüche, **dadurch gekennzeichnet, dass** ein Ankerführungsrohr (10b) des in Einsetzrichtung hinteren Ankers (10a) der beiden Anker (10a, 11a) zumindest teilweise in dem mittleren, schmaleren zylindrischen Bereich (18c) aufgenommen ist.

6. Magnetventil nach einem der vorherigen Ansprüche, **dadurch gekennzeichnet, dass** der in Einsetzrichtung vordere Anker (11a) der beiden Anker (10a, 11a) einen kleineren Querschnitt als der in Einsetzrichtung hintere Anker (10a) der beiden Anker (10a, 11a) aufweist.

7. Magnetventil nach einem der vorherigen Ansprüche, **dadurch gekennzeichnet, dass** das Primärventil (10) und das Sekundärventil (11) einen gemeinsamen Kern (15) aufweisen.

8. Magnetventil nach Anspruch 7, **dadurch gekennzeichnet, dass** der gemeinsame Kern (15) einteilig ausgebildet ist.

9. Magnetventil nach einem der vorherigen Ansprüche, **dadurch gekennzeichnet, dass** das Sekundärventil (11) in Einsetzrichtung vorne und das Primärventil (10) in Einsetzrichtung hinten in der Ventilpatrone (8) angeordnet ist.

10. Magnetventil nach einem der vorherigen Ansprüche, **dadurch gekennzeichnet, dass** die Primärseite (8a) für einen Druckluftanschluss zum Zuführen von Druckluft und die Sekundärseite (8b) zur Ausgabe von Druckluft vorgesehen ist.

11. Magnetventil nach Anspruch 10, **dadurch gekennzeichnet, dass** das Primärventil (10) als 2/2-Wegeventil ausgebildet ist.

12. Magnetventil nach Anspruch 10 oder 11, **dadurch gekennzeichnet, dass** das Sekundärventil (11) als 3/2-Wegeventil ausgebildet ist.

13. Magnetventil nach Anspruch 12, **dadurch gekennzeichnet, dass** das Sekundärventil (11) einen ersten Ausgang (12a) für einen Steuerdruckanschluss oder Belüftungsanschluss und ein zweiten Ausgang (12b) für einen Entlüftungsanschluss aufweist.

14. Magnetventil nach Anspruch 13, **dadurch gekennzeichnet, dass**
im strömlosen Zustand das Primärventil (10) offen ist und das Sekundärventil (11) den Belüftungsanschluss (12a) frei lässt und den Entlüftungsanschluss (12b) sperrt,
bei einer ersten, niedrigeren Stromstärke das Primärventil (10) geschlossen ist und das Sekundärventil (11) den Belüftungsanschluss (12a) frei lässt und den Entlüftungsanschluss (12b) sperrt,
bei einer zweiten, höheren Stromstärke das Primärventil (10) geschlossen ist und das Sekundärventil (11) den Entlüftungsanschluss (12a) freigibt und den Belüftungsanschluss (12b) frei lässt, so dass diese miteinander für eine Entlüftung verbunden sind.

15. Magnetventil nach einem der vorherigen Ansprüche,
**dadurch gekennzeichnet, dass** die Ventilpatrone (8) in eine Sackbohrung (4) des umgebenden Hauptgehäuses (2) einsetzbar ist.

16. Magnetventil nach Anspruch 15, **dadurch gekennzeichnet, dass** die Ventilpatrone (8) mit ihrer Sekundärseite in die Sackbohrung (4) gesetzt ist und durch eine erstmalige Druckbeaufschlagung in der Sackbohrung (4) fixierbar ist.

17. Elektropneumatische Ventilsteuereinheit, die aufweist:
ein Hauptgehäuse (2) mit mindestens einer Sackventilbohrung (4),
ein zweistufiges Magnetventil (1) nach einem der vorherigen Ansprüche, dessen Magnetspulensystem (6) in dem Hauptgehäuse (2) aufgenommen ist,
wobei die Magnetventileinrichtung (8) in die Sackventilbohrung (4) von der Primärseite (8a) oder Sekundärseite (8b) her eingesetzt ist.

18. Bremsmodulator, der aufweist:
eine elektropneumatische Ventilsteuereinheit nach Anspruch 17, und
ein luftmengenverstärkendes Relaisventil,
wobei die elektropneumatische Ventilsteuereinheit als Vorsteuereinheit vorgesehen ist, die mit ihren Magnetventilen das luftmengenverstärkendes Relaisventil ansteuert.

## Claims

1. Two-stage solenoid valve for an electropneumatic valve control unit, in particular a pilot control unit of a pressure modulator, wherein the solenoid valve has at least:
a solenoid system (6) which can be energized with a first current strength and with a second current strength, and a solenoid valve device (8) which is accommodated in the solenoid system (6) and has a primary side (8a) for connection to at least a first compressed air port and a secondary side (8b) for connection to at least one second compressed air port,
wherein a primary valve (10) with an adjustable primary armature (10a), which is prestressed by a primary armature spring (10c), is provided on the primary side for abutment against at least one primary valve seat (13),
wherein a secondary valve (11) with an adjustable secondary armature (11a), which is prestressed by a secondary armature spring (11c), is provided on the secondary side for abutment against at least one secondary valve seat (14b),
**characterized in that**
the solenoid valve device (8) is embodied as a valve cartridge (8) which can be inserted from the primary side (8a) or the secondary side (8b) into a main housing (2) of the valve control unit,
a diameter of a region (18b) of the valve cartridge (8) which is at the front in the insertion direction is less than or equal to the diameter of a region (18a) of the valve cartridge (8) which is at the rear in the insertion direction,
the valve cartridge (8) has a stepped element (18) with the rear relatively wide region (18a) and at least one relatively narrow region (18b, c),
a front region (18b), which is associated with the relatively narrow region, of the stepped piston accommodates the front armature spring (11c) of the two armature springs (10c, 11c),
a central region (18c), which is associated with the relatively narrow region, of the stepped piston respectively at least partially accommodates the primary armature (10a) and secondary armature (11a) and is provided for insertion into the solenoid system (6), the rear relatively wide region (18a) of the stepped piston accommodates the rear armature spring (10c) of the two armature springs (10c, 11c), and
the valve seats (13, 14a, b) of the side which is at the front in the insertion direction and the side which is at the rear in the insertion direction are connected to the stepped element (18).

2. Solenoid valve according to Claim 1, **characterized in that** the diameter of the region (18a), which is at the rear in the insertion direction, of the valve cartridge (8) is larger than or equal to the diameter of the central coil region (18c) of the valve cartridge (8).

3. Solenoid valve according to Claim 1 or 2, **characterized in that** the rear region (18a) has a larger diameter than the front region (18b), and
the central region (18c) has a larger diameter than the front region (18b) or the same diameter as the front region (18b).

4. Solenoid valve according to one of the preceding claims, **characterized in that** the connection of the valve seats (13, 14a, b) of the side which is at the front in the insertion direction and of the side which is at the rear in the insertion direction to the stepped element (18) is embodied by flanging and/or caulking and/or welding.

5. Solenoid valve according to one of the preceding claims, **characterized in that** an armature guide tube (10b) of the armature (10a) of the two armatures (10a, 11a) which is at the rear in the insertion direction is accommodated at least partially in the central, relatively narrow cylindrical region (18c).

6. Solenoid valve according to one of the preceding claims, **characterized in that** the armature (11a) of the two armatures (10a, 11a) which is at the front in the insertion direction has a smaller cross section than the armature (10a) of the two armatures (10a, 11a) which is at the rear in the insertion direction.

7. Solenoid valve according to one of the preceding claims, **characterized in that** the primary valve (10) and the secondary valve (11) have a common core (15).

8. Solenoid valve according to Claim 7, **characterized in that** the common core (15) is embodied in one piece.

9. Solenoid valve according to one of the preceding claims, **characterized in that** the secondary valve (11) is arranged at the front in the insertion direction, and the primary valve (10) is arranged at the rear in the insertion direction, in the valve cartridge (8).

10. Solenoid valve according to one of the preceding claims, **characterized in that** the primary side (8a) is provided from a compressed air port for feeding in compressed air, and the secondary side (8b) is provided for outputting compressed air.

11. Solenoid valve according to Claim 10, **characterized in that** the primary valve (10) is embodied as a 2/2-way valve.

12. Solenoid valve according to Claim 10 or 11, **characterized in that** the secondary valve (11) is embodied as a 3/2-way valve.

13. Solenoid valve according to Claim 12, **characterized in that** the secondary valve (11) has a first outlet (12a) for a control pressure port or ventilation port, and a second outlet (12b) for a venting port.

14. Solenoid valve according to Claim 13, **characterized in that** in the currentless state the primary valve (10) is open and the secondary valve (11) leaves the ventilation port (12a) open and closes the venting port (12b),
in the case of a first, relatively low current strength the primary valve (10) is closed and the secondary valve (11) leaves the ventilation port (12a) open and closes the venting port (12b), and
in the case of a second, relatively high current strength the primary valve (10) is closed and the secondary valve (11) opens the venting port (12a) and leaves the ventilation port (12b) open, with the result that the latter are connected to one another for a venting process.

15. Solenoid valve according to one of the preceding claims, **characterized in that** the valve cartridge (8) can be inserted into a blind bore (4) in the surrounding main housing (2).

16. Solenoid valve according to Claim 15, **characterized in that** the valve cartridge (8) is fitted with its secondary side into the blind bore (4) and can be secured in the blind bore (4) by an initial application of pressure.

17. Electropneumatic valve control unit which has:
a main housing (2) with at least one blind valve bore (4),
a two-stage solenoid valve (1) according to one of the preceding claims, the solenoid system (6) of which is accommodated in the main housing (2),
wherein the solenoid valve device (8) is inserted into the blind valve hole bore (4) from the primary side (8a) or from the secondary side (8b).

18. Brake modulator which has:
an electropneumatic valve control unit according to Claim 17, and an air-quantity-increasing relay valve, wherein the electropneumatic valve control unit is provided as a pilot control unit which actuates, by means of its solenoid valves, the air-quantity-increasing relay valve.

## Revendications

1. Soupape magnétique à deux étages pour unité de commande électromagnétique de soupape, en particulier unité de pré-commande d'un modulateur de pression, la soupape magnétique présentant au moins :
un système (6) de bobine magnétique qui peut être alimenté à une première et une deuxième intensité en courant et
un dispositif (8) de soupape magnétique logé dans le système (6) de bobine magnétique et présentant un côté primaire (8a) destiné à être raccordé à au moins un premier raccord d'air sous pression et un côté secondaire (8b) destiné à être raccordé à au moins un deuxième raccord d'air sous pression,
une soupape primaire (10) dotée d'un induit primaire (10a) ajustable, précontraint par un ressort (10c) d'induit primaire pour venir se placer sur au moins un siège (13) de soupape primaire,
une soupape secondaire (11) dotée d'un induit secondaire (11a) ajustable, précontraint par un ressort (11c) d'induit secondaire étant prévu sur le côté secondaire pour venir se placer sur au moins un siège (14b) de soupape secondaire,
**caractérisée en ce que**
le dispositif (8) de soupape magnétique est configuré comme cartouche de soupape (8) destinée à être insérée par le côté primaire (8a) ou le côté secondaire (8b) dans un boîtier principal (2) de l'unité de commande de soupape,
**en ce qu'**un diamètre d'une partie (18b), située en avant dans la direction d'insertion, de la cartouche de soupape (8) est inférieur ou égal au diamètre d'une partie (18a), située en arrière dans la direction d'insertion, de la cartouche de soupape (8),
**en ce que** la cartouche de soupape (8) présente un corps étagé (18) doté d'une partie arrière (18a) plus large et d'au moins une partie (18b, c) plus étroite,
**en ce qu'**une partie avant (18b), qui fait partie de la partie plus étroite, du piston étagé reprend le ressort (11c) d'induit avant des deux ressorts d'induit (10 11c),
**en ce qu'**une partie centrale (18c), qui fait partie de la partie plus étroite, du piston étagé reprend l'induit primaire (10a) et l'induit secondaire (11a), chacun au moins partiellement, et est prévue pour être utilisée dans le système (6) de bobine magnétique,
**en ce que** la partie arrière plus large (18a) du piston étagé reprend le ressort (10c) d'induit arrière des deux ressorts d'induit (10c), (11c) et
**en ce que** le siège de soupape (13, 14a, b) du côté avant dans la direction d'insertion et du côté arrière dans la direction d'insertion de la cartouche de soupape (8) est relié au corps étagé (18).

2. Soupape magnétique selon la revendication 1, **caractérisée en ce que** le diamètre de la partie (18a), située en arrière dans la direction d'insertion, de la cartouche de soupape (8) est supérieur ou égal au diamètre de la partie centrale (18c) de la bobine de la cartouche de soupape (8).

3. Soupape magnétique selon les revendications 1 ou 2, **caractérisée en ce que** la partie arrière (18a) présente un diamètre supérieur à celui de la partie avant (18b) et **en ce que** la partie centrale (18c) présente un diamètre supérieur ou égal à celui de la partie avant (18b).

4. Soupape magnétique selon l'une des revendications précédentes, **caractérisée en ce que** la liaison entre le siège de soupape (13, 14a, b), du côté situé en avant dans la direction d'insertion et du côté situé en arrière dans la direction d'insertion, et le corps étagé (18) est réalisée par rabattement, matage et/ou soudage.

5. Soupape magnétique selon l'une des revendications précédentes, **caractérisée en ce qu'**un tube (10b) de guidage d'induit de l'induit (10a) situé en arrière dans la direction d'insertion des deux induits (10a, 11a) est repris au moins en partie dans la partie cylindrique centrale (18c) plus étroite.

6. Soupape magnétique selon l'une des revendications précédentes, **caractérisée en ce que** l'induit (11a) situé en avant dans la direction d'insertion des deux induits (10a, 11a) présente une section transversale plus petite que l'induit (10a) situé en arrière dans la direction d'insertion des deux induits (10a, 11a).

7. Soupape magnétique selon l'une des revendications précédentes, **caractérisée en ce que** la soupape primaire (10) et la soupape secondaire (11) présentent un noyau commun (15).

8. Soupape magnétique selon l'une des revendications précédentes, **caractérisée** selon la revendication 7, **caractérisée en ce que** le noyau commun (15) est réalisé en une seule pièce.

9. Soupape magnétique selon l'une des revendications précédentes, **caractérisée en ce que** la soupape secondaire (11) est disposée en avant dans la direction d'insertion et la soupape primaire (10) en arrière dans la direction d'insertion dans la cartouche de soupape (8).

10. Soupape magnétique selon l'une des revendications précédentes, **caractérisée en ce que** le côté primaire (8a) est prévu pour le raccordement à l'air comprimé en vue d'amener de l'air comprimé et le côté secondaire (8b) pour délivrer de l'air comprimé.

11. Soupape magnétique selon la revendication 10, **caractérisée en ce que** la soupape primaire (10) est configurée comme soupape à 2/2 voies.

12. Soupape magnétique selon les revendications 10 ou 11, **caractérisée en ce que** la soupape secondaire (11) est configurée comme soupape à 3/2 voies.

13. Soupape magnétique selon la revendication 12, **caractérisée en ce que** la soupape secondaire (11) présente une première sortie (12a) pour le raccord de pression pilote ou le raccord d'alimentation en air et une deuxième sortie (12b) pour un raccord d'évacuation d'air.

14. Soupape magnétique selon la revendication 13, **caractérisée en ce qu'**en l'absence de courant, la soupape primaire (10) est ouverte, la soupape secondaire (11) libère le raccord (12a) d'alimentation en air et bloque le raccord (12b) d'évacuation d'air, **en ce qu'**à une première intensité basse de courant, la soupape primaire (10) est fermée, la soupape secondaire (11) libère le raccord (12a) d'alimentation en air et bloque le raccord (12b) d'évacuation d'air et **en ce qu'**à une deuxième intensité de courant plus élevée, la soupape primaire (10) est fermée et la soupape secondaire (11) libère le raccord (12a) d'évacuation d'air et libère le raccord (12b) d'alimentation en air, de telle sorte que ces deux raccords soient reliés pour permettre l'évacuation d'air.

15. Soupape magnétique selon l'une des revendications précédentes, **caractérisée en ce que** la cartouche (8) de soupape peut être insérée dans un alésage aveugle (4) du boîtier principal (2) qui les englobe.

16. Soupape magnétique selon la revendication 15, **caractérisé en ce que** la cartouche (8) de soupape est placée par son côté secondaire dans l'alésage aveugle (4) et peut être fixée dans l'alésage aveugle (4) lorsqu'elle a été sollicitée en pression pour la première fois.

17. Unité électropneumatique de commande de soupape qui présente :
un boîtier principal (2) doté d'au moins un alésage aveugle (4) de soupape,
une soupape magnétique (1) à deux étages selon l'une des revendications précédentes, dont le système (6) de bobine magnétique est repris dans le boîtier principal (2), le dispositif (8) de soupape magnétique pouvant être inséré dans l'alésage aveugle (4) de soupape par son côté primaire (8a) ou par son côté secondaire (8b).

18. Modulateur de frein qui présente :
une unité électromagnétique de commande de soupape selon la revendication 17 et
une soupape relais qui amplifie le débit d'air,
l'unité électropneumatique de commande de soupape étant prévue comme unité de pré-commande qui commande par ses soupapes magnétiques la soupape relais qui amplifie le débit d'air.
